**Europäisches Patentamt**

**European Patent Office**

**Office européen des brevets**

(11) Veröffentlichungsnummer : **0 358 855 B1**

(12) **EUROPÄISCHE PATENTSCHRIFT**

(45) Veröffentlichungstag der Patentschrift :
**13.05.92 Patentblatt 92/20**

(21) Anmeldenummer : **89110521.5**

(22) Anmeldetag : **10.06.89**

(51) Int. Cl.⁵ : **F02F 11/00**, F16J 15/08

(54) Metallische Flachdichtung.

(30) Priorität : **15.09.88 DE 3831339**

(43) Veröffentlichungstag der Anmeldung :
**21.03.90 Patentblatt 90/12**

(45) Bekanntmachung des Hinweises auf die
Patenterteilung :
**13.05.92 Patentblatt 92/20**

(84) Benannte Vertragsstaaten :
**DE FR GB IT**

(56) Entgegenhaltungen :
**DE-A- 2 836 626**
**GB-A- 2 115 503**

(73) Patentinhaber : **GOETZE AG**
**Bürgermeister-Schmidt-Strasse 17**
**W-5093 Burscheid 1 (DE)**

(72) Erfinder : **Majewski, Klaus-Peter, Dipl.-Ing.**
**Am Sportfeld 26**
**W-5093 Burscheid (DE)**
Erfinder : **Guyot, Kurt**
**AGEH Theodor-Hürth-Strasse 6**
**W-5000 Köln 21 Deutz (DE)**

(74) Vertreter : **Weiss, Jürgen**
**GOETZE AG Bürgmeister-Schmidt-Strasse 17**
**W-5093 Burscheid 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft eine metallische Flachdichtung, wie insbesondere eine Zylinderkopfdichtung für Verbrennungskraftmaschinen, bestehend aus einer oder mehreren übereinanderliegenden Metallblechplatten aus bevorzugt Stahl mit mindestens einer von einer Sicke umgebenen Durchgangsöffnung.

Metallische Zylinderkopfdichtungen aus einer oder mehreren übereinanderliegenden Stahlblechplatten sind bevorzugt an den Brennraumöffnungen oder den Flüssigkeitsöffnungen mit ringförmig die Öffnungen umgebenden Sicken versehen. Die Sicken besitzen einen etwa sinusbogenförmigen Querschnitt, sie können zusätzlich von metallischen Einfassungen umgeben sein, und bei mehrlagigen Metalldichtungen können gegebenenfalls die Sicken nur in einem Teil der Metallblechplatten angeordnet sein. Mehrlagige Dichtungen können darüber hinaus auch aus Metallblechen mit unterschiedlichen technologischen Eigenschaften bestehen, und die Metallblechplatten können ein- oder beidseitig, bevorzugt aber an den äußeren Flächen vor allem zur Verbesserung der Mikro- und Makroabdichtung mit teil- oder ganzflächigen Oberzügen aus vor allem weicheren Metallen oder Elastomeren versehen sein.

Die bevorzugt im Querschnitt etwa sinusbogenförmig verlaufenden Sicken bewirken im montierten Zustand an den Öffnungsrändern eine erhöhte Dichtpressung und damit eine erhöhte Abdichtwirkung, indem sie beim Einbau zwischen den abzudichtenden Motorflächen weitgehend flachgedrückt werden und entsprechend eine Kraftaufnahme erhalten. Die bevorzugte Sickenform hat daher eine relativ große Höhe bei einem relativ schmalen Scheitel, so daß sich bei der Verformung eine relativ hohe Dichtpressung in einer relativ schmalen Zone einstellen kann.

Das elastisch federnde Metallblech erhält gleichzeitig entsprechend seinem Elastizitätsmodul bei der Verformung eine elastische Rückverformungskraft, durch die nachlassende Dichtpressungskräfte ausgeglichen werden. Diese für das Abdichtverhalten erforderliche elastische Rückverformungskraft geht jedoch beim weitgehenden Flachdrücken der Sicke durch die dann stattfindende elastische Verformung verloren, und es ist beispielsweise bei Tellerfedern aus Federstahlblechen bekannt, daß bei einer Verformung von mehr als 75 % die elastischen Rückverformungskräfte verloren gehen. Bei der Konstruktion einer Sicke muß daher ein Kompromiß geschlossen werden, nämlich einmal muß die Sicke eine ausreichende Höhe besitzen, damit beim Einbau die Sicke eine hohe Verformung und damit eine hohe Kraftaufnahme mit entsprechend hoher Abdichtwirkung erfährt, während andererseits die Sicke nur bis zu einem gewissen Grad verformt werden darf, damit ihre elastische Rückverformungskraft nach der Verformung erhalten bleibt. Unter diesen Bedingungen ist es vor allem in komplizierten Anwendungsfällen schwierig, die geeignete Sickenform zu finden.

Nach der DE-A-2 836 626 ist es bekannt, die die Öffnungen umgebenden Sicken von Zylinderkopfdichtungen im Querschnitt doppelt wellenförmig und dadurch im Profil W-förmig zu gestalten. Mir solchen Sicken können vor allem etwa rechteckige Öffnungen in Flachdichtungen befriedigend abgedichtet werden.

Der vorliegenden Erfindung liegt daher die Aufgabe zugrunde, eine metallische Flachdichtung gemäß Oberbegriff des Hauptpatentanspruches zu schaffen, deren Sicke unter der Verformung beim Einbau sowohl eine hohe Kraftaufnahme mit entsprechend hoher Abdichtwirkung als auch eine hohe elastische Rückverformungskraft erhält.

Diese Aufgabe wird durch eine metallische Flachdichtung gelöst, deren Sicke erfindungsgemäß im Querschnittsverlauf im ersten Sickenabschnitt im Vergleich zu dem zweiten Sickenabschnitt relativ hoch und schmal ist, während der zweite Sickenabschnitt im Vergleich zu dem ersten Sickenabschnitt relativ breit und flach ist, wobei die Sicke einen im Vergleich zu der Breite des ersten Sickenabschnittes relativ hohen Scheitel mit zu den Fußpunkten stetig abfallendem, wellenförmigem Sickenkonturverlauf besitzt. Die erfindungsgemäße Sicke besitzt dann einen relativ schmalen und hohen Scheitel sowie gleichzeitig einen zum Fußpunkt allmählich abfallenden, wellenförmigen Verlauf und ist als Kombinationssicke unterteilt in einen schmalen, hohen ersten Bereich, der beim Einbau zwischen die abzudichtenden Flächen stark verformt wird, und einen bevorzugt beidseitig vom ersten schmalen Bereich abgesetzt angeordneten, relativ flachen und breiten zweiten Bereich, der beim Einbau nur schwach verformt wird.

Bei der Verformung erhält der erste Bereich eine starke Kraftaufnahme, so daß sich im eingebauten Zustand eine starke Linienpressung zur optimalen Abdichtung einstellt. Durch die hohe Verformung besitzt dieser Bereich nur geringe elastische Rückverformungskräfte. Der zweite schwach verformte Bereich wird im wesentlichen nur elastisch verformt und besitzt im Einbauzustand eine hohe elastische Rückverformungskraft bei nur geringer Dichtpressung.

Die erfindungsgemäße Kombinationssicke besitzt damit eine optimale, über die hohe Linienpressung erreichte Abdichtwirkung bei gleichzeitig optimaler elastischer Rückfederung zum Ausgleich der im längeren Betrieb gegebenenfalls nachlassenden Dichtpressung. Diese Wirkung der erfindungsgemäßen Sicke konnte in Betriebsversuchen bestätigt werden.

Die optimale Formgebung der Sicke richtet sich nach den Materialeigenschaften der zur Herstellung der Dichtung verwendeten Metallbleche. Bei den bevorzugt eingesetzten Federstahlblechen von etwa 0,2 bis 1,2 mm Dicke hat sich eine Sicke als vorteilhaft erwiesen, deren Scheitelhöhe im ersten stark verformbaren Bereich etwa zwei- bis dreimal so groß ist wie die Scheitelhöhe des zweiten schwach verformbaren Bereiches. Analog ist die Breite des zweiten schwach verformbaren Bereiches etwa zwei- bis dreimal so groß wie die Breite des stark verformbaren Bereiches.

Im Sinne der Erfindung ist es dabei auch möglich, die Sicke abgestuft in mehr als zwei Bereiche unterschiedlicher Höhe und damit Verformung zu unterteilen, so daß die Kontur der Sicke vom Bereich der größten Scheitelhöhe mehrfach gewellt zum Sickenfuß abfällt.

Während ferner bevorzugt die Sickenform symmetrisch mit beidseitig vom Bereich der größten Scheitelhöhe deckungsgleich abfallender gewellter Kontur ist, kann im Sinne der Erfindung die Sicke auch unsymmetrisch sein, so daß die gewellte Sickenkontur vom Bereich der größten Scheitelhöhe beidseitig mit einem unterschiedlichen Verlauf abfällt.

Während bevorzugt ferner die erfindungsgemäße Sicke in einlagigen metallischen Flachdichtungen an den Öffnungsrändern angeordnet sein soll, ist es auch möglich, mehrlagige Metalldichtungen mit der erfindungsgemäßen Sicke zu versehen. Die Metallbleche liegen dann abwechselnd gesickt und ungesickt übereinander, so daß bei einer dreilagigen Metalldichtung entweder das mittlere Kernblech oder die beiden äußeren Metallbleche gesickt sind, während entsprechend die aufliegenden äußeren Metallbleche beziehungsweise das mittlere Kernblech ungesickt bleiben. Die Metallbleche können, wie bei Dichtungen mit herkömmlichen Sicken bekannt, ein- oder beidseitig mit Überzügen versehen und die Sicken können mit üblichen metallischen Einfassungen umhüllt sein.

Durch die Erfindung ist somit eine metallische Flachdichtung mit Sicken geschaffen, welche insbesondere in schwierigen Abdichtungsfällen optimal mit langer Lebensdauer abdichtet.

Konstruktiv ist die Sicke nicht aufwendiger als herkömmliche Sicken herstellbar, und da die Sicke eine relativ geringe, radiale Wandstärke besitzt, ist sie aufgrund ihres geringen radialen Bauraumes praktisch universell auch an eng benacharten Durchgangsöffnungen einsetzbar. Die Sicke braucht dabei nicht unbedingt eine einzelne Durchgangsöffnung ringförmig zu umgeben, sondern sie kann, wie bei herkömmlichen Sicken üblich, auch größere Dichtungsflächen mit mehreren Durchgangsöffnungen umgeben oder sie kann linienförmig am Dichtungsrand angeordnet sein.

Die Erfindung wird anhand der Abbildungen näher erläutert, die Querschnittsbilder bevorzugter Ausführungsbeispiele der erfindungsgemäßen Sickenformen darstellen.

Es zeigen:

Figur 1 die bevorzugte Sickenform im nicht eingebauten Zustand im Querschnitt

Figur 2 die Sicke der Figur 1 im eingebauten Zustand im Querschnitt

Figur 3 die Pressungsverteilung des verformten Sickenbereiches der Sicke gemäß Figur 1

Figuren 4 und 5 weitere erfindungsgemäße Sickenformen im Querschnitt

Figur 6 eine dreilagige Dichtungsplatte mit einem gesickten Kernblech im Querschnitt.

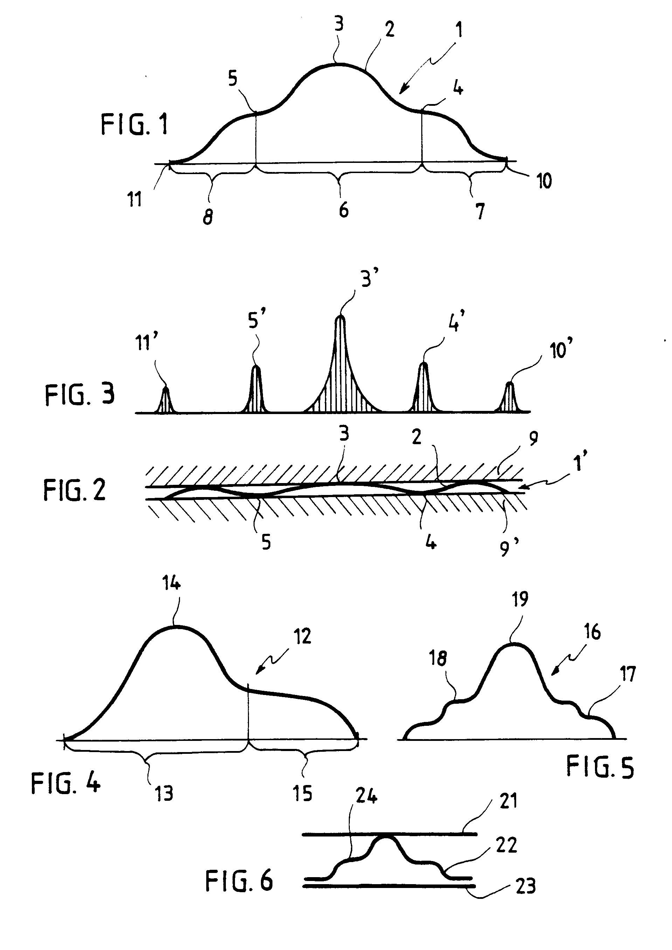

Figur 1 zeigt die aus einer schmalen hohen und relativ breiten flachen Sicke zusammengesetzte Kombinationssicke (1) des Dichtungsbleches (2) aus Federstahl an einem Öffnungsrand einer Zylinderkopfdichtung. Die Sicke (1) besitzt einen schmalen, relativ hohen Scheitel (3), von dem beidseitig symmetrisch die Sickenkontur jeweils einmal gewellt abfällt. Die Kombinationssicke (1) besitzt damit einen ersten relativ hohen und schmalen Bereich (6) und einen breiten, relativ flachen Bereich (7,8) beidseitig vom Sickenscheitel mit ihren eigenen Scheitelpunkten (4,5).

Durch den Einbau zwischen die Dichtflächen (9) der abzudichtenden Maschinenteile wird die Sicke (1′) gemäß Figur 2 zusammengepreßt, wobei die Kraftaufnahme in den einzelnen Sickenbereichen in Figur 3 dargestellt ist.

Am höchsten Sickenscheitel (3) erfolgt die größte Verformung der Sicke (1) mit entsprechend hoher Kraftaufnahme (3′). An den Scheitelpunkten (4,5) des flachen Sickenbereiches (7,8) erfolgt eine vollständige Verformung unter gleichzeitiger Stauchung, so daß in diesen Bereichen (4′,5′) eine mittlere Kraftaufnahme mit entsprechend hohen Dichtpressungsdrucken entsteht, und an den Sickenfußpunkten (10,11) erfolgt die Verformung des Dichtungsbleches nur noch durch Stauchung mit entsprechend hoher Rraftaufnahme beziehungsweise Dichtpressung (10′,11′).

Entsprechend dem Verformungsweg stellt sich im verformten Dichtungsblech (2) eine elastische Rückverformungskraft ein, allerdings liegt die Verformung des relativ hohen Sickenbereiches (6) über 75 %, so daß hier die Verformung überwiegend plastisch ist und kaum eine elastische Rückverformungskraft entsteht. Die Verformung im flachen Sickenbereich (7, 8) zwischen den beiden Scheitelpunkten (4,5) und den beiden Fußpunkten (10,11) liegt unter 75 %, die Verformung ist überwiegend elastisch, und es entstehen hier die größten elastischen Rückverformungskräfte.

Die Sickenform (12) der Figur 4 ist unsymmetrisch, mit einem einseitig steil ansteigenden hohen Sickenteil (13), mit dem Sickenscheitel (14) und daran einseitig angeschlossenem, flachem Sickenteil (15.)

Die Sicke (16) der Figur 5 ist im Querschnittsverlauf mehrfach abgestuft, wobei die Sickenkonturen (17,18) vom Sickenscheitel (19) beidseitig relativ flach und jeweils zweifach abgestuft abfallen.

Die Dichtung (20) der Figur 6 besteht aus den drei übereinanderliegenden Metallblechplatten (21,22,23). Nur das mittlere Kernblech (22) ist am Öffnungsrand mit einer Kombinationssicke (24) versehen, die etwa die Form der Sicke (1) aus Figur 1 besitzt. Die beiden äußeren Metallbleche (21,23) liegen dagegen unverformt beidseitig auf dem gesickten (24) Kernblech (22) auf.

## Patentansprüche

1. Metallische Flachdichtung, insbesondere Zylinderkopfdichtung für Verbrennungskraftmaschinen, bestehend aus einer oder mehreren übereinanderliegenden Metallblechplatten aus bevorzugt Stahl mit mindestens einer Durchgangsöffnung, die von einer aus zwei zusammengeschlossenen Sickenabschnitten bestehenden Sicke (1,12,16,24) umgeben ist, dadurch gekennzeichnet, daß im Querschnittsverlauf der Sicke der erste Sickenabschnitt im Vergleich zu dem zweiten Sickenabschnitt relativ hoch und schmal ist und der zweite Sickenabschnitt im Vergleich zu dem ersten Sickenabschnitt relativ breit und flach ist, und daß dadurch die Sicke einen im Vergleich zu der Breite des ersten Sickenabschnittes relativ hohen Scheitel (3,14,19) mit zu den Fußpunkten (10,11) stetig abfallendem, wellenförmigem Sickenkonturverlauf besitzt.

2. Metallische Flachdichtung nach Anspruch 1, dadurch gekennzeichnet, daß die maximale Höhe des relativ hohen Sickenbereiches (6,13) etwa zwei- bis dreimal größer ist als die maximale Höhe des relativ flachen Sickenbereiches (7,8,15).

3. Metallische Flachdichtung nach den Ansprüchen 1 und 2, dadurch gekennzeichnet, daß die Breite des relativ flachen Sickenbereiches (7,8,15) etwa zwei- bis dreimal größer ist als die Breite des relativ hohen Sickenbereiches (6,13).

4. Metallische Flachdichtung nach mindestens einem der Ansprüche 1 bis 3, dadurch gekennzeichnet, daß die Sicke (1,16,24) im Querschnitt symmetrisch mit beidseitig vom Sickenscheitel (3,19) deckungsgleich abfallendem, wellenförmigem Sickenkonturverlauf ist.

5. Metallische Flachdichtung nach mindestens einem der Ansprüche 1 bis 3, dadurch gekennzeichnet, daß die Sicke (12) im Querschnitt unsymmetrisch mit vom Sickenscheitel (14) abfallendem, unterschiedlichem Sickenkonturverlauf ist.

6. Metallische Flachdichtung nach den Ansprüchen 1 bis 5, dadurch gekennzeichnet, daß die metallische Flachdichtung (20) mehrlagig ist und die Metallbleche (21,22,23) abwechselnd gesickt und ungesickt aufeinanderliegen.

7. Metallische Flachdichtung nach den Ansprüchen 1 bis 6, dadurch gekennzeichnet, daß mindestens ein Metallblech aus einem Federstahl mit 0,2 bis 1,2 mm Dicke besteht.

## Revendications

1. Dispositif plat d'étanchéité métallique, en particulier joint de tête de cylindre pour moteurs à combustion interne, constitué d'une ou de plusieurs plaques de tôles métalliques superposées de préférence en acier avec au moins une ouverture de passage qui est entourée d'une moulure (1,12,16,24) constituée de deux sections de moulure liées l'une à l'autre, caractérisé en ce que, selon le profil de coupe, la moulure de la première section de moulure est relativement haute et étroite par rapport à la deuxième section de moulure et la deuxième section de moulure est relativement large et plate par rapport à la première section de moulure; et en ce que la moulure possède un sommet (3,14,19) relativement élevé par rapport à la largeur de la première section avec un profil de contour ondulé, tombant de façon continue jusqu'aux pieds (10,11).

2. Dispositif plat d'étanchéité métallique selon la revendication 1, caractérisé en ce que la hauteur maximale de la zone (6,13) de moulure relativement élevée est environ deux à trois fois plus grande que la hauteur maximale de la zone (7,8,15) de moulure relativement plate.

3. Dispositif plat d'étanchéité métallique selon la revendication 1 ou la revendication 2, caractérisé en ce que la largeur de la zone (7,8,15) de moulure relativement plate est environ deux à trois fois plus grande que la largeur de la zone (6,13) de moulure relativement élevée.

4. Dispositif plat d'étanchéité métallique selon au moins une des revendications 1 à 3, caractérisé en ce que la moulure (1,16,24) est symétrique selon sa coupe avec un profil de contour de moulure ondulé, descendant de chaque côté à partir du sommet (3,19) de la moulure avec des recourvements égaux.

5. Dispositif plat d'étanchéité métallique selon au moins une des revendications 1 à 3, caractérisé en ce que la moulure (12) n'est pas symétrique selon sa coupe avec un profil de contour différent descendant à partir du sommet (14) de la moulure.

6. Dispositif plat d'étanchéité métallique selon les revendications 1 à 5, caractérisé en ce que le joint plat (20) métallique a plusieurs couches et en ce que les tôles métalliques (21,22,23) sont superposées avec, en alternance, présence et absence de moulures.

7. Dispositif plat d'étanchéité métallique selon les revendications 1 à 6, caractérisé en ce qu'au moins une tôle métallique est constituée d'un acier élastique d'épaisseur de 0,2 à 1,2 mm.

## Claims

1. Metallic flat gasket, especially a cylinder head gasket for internal combustion engines, consisting of one or more superimposed sheet metal plates preferably of steel, with a least one aperture therethrough, which is surrounded by a bead (1, 12, 16, 24) consisting of two bead sections joined together,characterized in that, in the cross-sectional shape of the bead the first bead section is relatively high and narrow in comparsion, with the second bead section and the second bead section is relatively wide and flat in comparsion with the first bead section, and in that the bead thereby has a relatively high peak (3, 14, 19) in comparsion with the width of the first bead section with a bead contour falling off steadily in a wave shape to the root points (10, 11) .

2. Metallic flat gasket according to claim 1, characterized in that the maximum height of the relatively high bead region (6, 13) is about twice to thrice the maximum height of the relatively flat region (7, 8, 15).

3. Metallic flat gasket according to claims 1 and 2, characterized in that the width of the relatively flat bead region (7, 8, 15) is about twice to thrice the width of the relatively high bead region (6, 13).

4. Metallic flat gasket according to at least one of claims 1 to 3, characterized in that the bead (1, 16, 24) is symmetrical in cross-section with a bead contour falling off congruently on both sides of the bead peak (3, 19) in a wave shape.

5. Metallic flat gasket according to at least one of claims 1 to 3, characterized in that the bead (12) is asymmetrical in cross-section, with different bead contours falling away from the bead peak (14).

6. Metallic flat gasket according to at least one of claims 1 to 5, characterized in that the metallic flat gasket is multi-layered and the metal sheets (21, 22, 23)are alternately beaded and unbeaded.

7. Metallic flat gasket according to claims 1 to 6, characterized in that at least one metal sheet consists of spring steel 0,2 to 1,2 mm thick.

FIG. 1

FIG. 3

FIG. 2

FIG. 4

FIG. 5

FIG. 6